# EUROPEAN PATENT SPECIFICATION

(11) **EP 2 349 071 B1**
(45) Date of publication and mention of the grant of the patent: **18.12.2013**
(21) Application number: 09759802.3
(22) Date of filing: 04.11.2009
(51) Int. Cl.: A61C 17/34

(54) **ELECTRIC TOOTHBRUSH AND BRUSH HEAD FOR AN ELECTRIC TOOTHBRUSH**
ELEKTRISCHE ZAHNBÜRSTE UND BÜRSTENKOPF FÜR EINE ELEKTRISCHE ZAHNBÜRSTE
BROSSE À DENTS ÉLECTRIQUE ET TÊTE POUR BROSSE À DENTS ÉLECTRIQUE

(30) Priority: 05.11.2008 EP 08019351
(43) Date of publication of application: 03.08.2011
(73) Proprietor: Braun GmbH, 61476 Kronberg/Taunus (DE)
(72) Inventor: DRIESEN, Georges, B-61276 Weilrod (BE); SCHMID, Michael, 60599 Frankfurt/Main (DE); SCHAEFER, Norbert, 60320 Frankfurt/Main (DE); REICK, Hansjoerg, Cincinnati Ohio 45234 (US); SCHAMBERG, Stefan, 61250 Usingen (DE); THURNAY, Eva, Susanne, 65929 Frankfurt/Main (DE); MCGARRY, Rory, 60596 Frankfurt/Main (DE)
(74) Representative: Töpert, Verena Clarita
(86) International application number: PCT/IB2009/054904
(87) International publication number: WO 2010/052658

(56) References cited:
- WO-A1-01/60281
- WO-A1-98/26730
- WO-A2-2008/029377
- US-A- 4 420 851
- US-A1- 2005 011 023

## Description

### FIELD OF THE INVENTION

This invention relates to an electric toothbrush and a brush head therefore, with a preferably plate-shaped bristle support carrying a bristle field having a bristle field main axis extending preferably perpendicularly to the bristle support, said bristle field including a plurality of bristles defining with their free ends a flat or concave working surface to be put onto the teeth to be cleaned, the brush head further comprising driving and/or transmitting means for driving the bristle support using a reciprocating poking motion along a poking axis and optionally an oscillatory rotational motion about an axis of rotation, and comprising connecting means for connecting the bristle support with a toothbrush handpiece, with a brush head longitudinal axis extending substantially parallel to a toothbrush handpiece longitudinal axis in connected condition, wherein the bristle field with its bristle field main axis is arranged at a tilt relative to the brush head longitadinal axis such that the bristle field main axis is inclined at an acute angle of inclination to a perpendicular upon the brush head longitudinal axis.

### BACKGROUND OF THE INVENTION

The aforementioned longitudinal axis of the toothbrush handpiece means the central longitudinal axis through the grip section of the handpiece since such gripping section defines the way of holding the toothbrush.

Electric toothbrushes regularly possess bristle supports adapted to be driven in an oscillatory rotational motion and having bristle fields mounted thereon whose main axis extends approximately at right angles to the toothbrush longitudinal axis which is defined by the toothbrush handpiece. In use, the rotation about an axis of rotation in the center of the brush head results in an automatic centering of the brush head around the respective tooth to be cleaned. The bristle tufts farthest away from the axis of rotation in the toothbrush longitudinal direction move back and forth in the hollows between two teeth or the interproximal spaces, while the axis of rotation in the middle of the bristle field is directed centrally at the corresponding tooth flank. Such a centering effect results in particular when the circumferential bristles of the bristle field are higher or the bristle field has a depression in its center. Such a toothbrush is disclosed, for example, in EP 0835081 B1.

To improve in particular the cleansing of interproximal spaces and to dislodge plaque better, it is known in this context to drive the bristle field not only in an oscillatory rotational motion but also in a reciprocating poking motion substantially parallel to the bristle field main axis. If such a poking motion takes place in addition to the oscillatory rotational motion, the term 3D toothbrush is conventionally used, meaning a spatially or multidimensionally drivable bristle field, because the bristle tips move in the space in all three dimensions. Such a combined spatial movement of the bristle field has the above-mentioned self-centering effect and has proved more effective regarding the cleansing performance.

However, such a poking motion in the direction of the bristle field main axis tends to produce relatively high forces which act on the tooth surfaces and the gums, which is sometimes perceived as unpleasant because the poking motion is performed substantially in the form of prodding motions at right angles to the gums. To produce no unpleasant cleaning sensation in this regard, it has been suggested to limit the amplitude of the poking motion, in actual fact making it very small. However, this leads again to a reduced brushing efficiency because the depth of penetration into the interproximal spaces remains relatively limited.

As an alternative to such brush heads using poking motions substantially parallel to the bristle field main axis, toothbrushes have been proposed which have an eccentric drive in the brush head and an inclined brush head, thereby causing the brush head and also the bristles to move on an orbital path or an ellipse. Because there is no axis of rotation in the center of the brush head about which the head oscillates in a rotary movement, such toothbrushes do not enjoy the initially mentioned self-centering effect. Already in the presence of a low contact pressure the toothbrush dances around on the teeth in all directions and is difficult to position. At a higher contact pressure, even the cleansing performance drops sharply as a result of the drive, making it necessary for the brush head to be moved across the teeth using back and forth movements as with a manual toothbrush. Obviously, any centering of the brush head relative to the tooth via an axis of rotation in the center of the bristle field is then out of the question.

On the other hand, on the toothbrushes or brush heads of the previously mentioned type, which use an oscillatory rotational motion about an axis of rotation and an additional poking motion in the direction of this axis of rotation, the use of thinner bristles has been proposed for producing a "softer" cleaning sensation, bristles which bend much more easily as a result of which the prodding motions perpendicularly to the gums are perceived as less discomforting. However, by reducing the bristle diameter in this way, their cleansing efficiency drops dramatically when these bristles are guided across the tooth surface in bent condition - which is regularly the case. Insofar, this reduced-diameter approach offers no solution for the mentioned dilemma either, according to which on the one hand the use of poking motions of a sufficiently high amplitude in the presence of sufficient cleaning forces should produce a good cleaning effect while on the other hand the cleaning process is gentle on the gums.

US 2005/011023 A1 discloses an electric toothbrush having a brush head having a reciprocating poking motion and an oscillatory rotational motion.

Proceeding from the foregoing, it is an object of the present invention to provide an improved electric toothbrush and an improved brush head therefor, each in accordance with the prior art initially referred to, which prevent the disadvantages of the prior art while developing the art further in advantageous manner. Preferably, an effective dental cleaning action reaching deep into interproximal spaces and at the same time a gentle cleaning sensation are to be accomplished without sacrificing the self-centering effect of the movement of the bristle field.

### SUMMARY OF THE INVENTION

This object is accomplished according to the present invention by a brush head for an electric toothbrush according to claim 1 and by an electric toothbrush having such a brush head according to claim 15. Preferred embodiments of the invention are the subject-matter of the dependent claims.

Accordingly, it is proposed arranging the bristle support with its bristle field, which is drivable at least in a reciprocating poking motion along a poking axis and optionally additionally spatially in an oscillatory rotational motion about an axis of rotation, in a special way such that during the poking motion the bristle tufts do not strike the tooth or gum surface at exactly right angles but nevertheless may effect self-centering of the bristle field when the rotating/pivoting motion about the axis of oscillation or rotation is provided. According to the invention, the bristle support with its bristle field is arranged at a tilt relative to the brush head longitudinal axis, such that the main axis of the bristle field is inclined at an acute angle to a perpendicular upon the toothbrush and/or brush head longitudinal axis, whereas the working surface is inclined in opposite direction to the tilt of the bristle field main axis such that a plane lying onto the working surface is sloped at an acute angle to a plane perpendicular to said bristle field main axis.

By tilting the bristle support out of its "straight" orientation as conventionally used on bristle supports drivable spatially, i.e., in an oscillatory rotational motion and a poking motion, where the main axis of the bristle field extends at right angles to the toothbrush longitudinal axis, into a slightly tilted, "skew" orientation, a pleasant brushing sensation even on the gums is achievable in spite of the poking motions of the bristle field, because the bristle field with its main axis and hence the majority of the bristles are positioned against the surface to be cleaned at a slight inclination. This largely avoids the buckling column case in which the reaction forces of the poking motion are introduced into the bristles exactly in longitudinal direction, and can only occur on surfaces which happen to be inclined at the corresponding angle. This is however a relatively rare occurrence because the user typically positions the toothbrush at right angles against the teeth. To avoid said buckling column case, it is helpful to have also the poking axis at a tilt relative to the brush head longitudinal axis, i.e. inclined at an acute angle to the perpendicular upon the brush head longitudinal axis. In particular, the poking axis may extend parallel to said perpendicular upon the brush head longitudinal axis. The desired self-centering effect may nevertheless be achieved when the oscillatory rotational motion is provided which ensures that the toothbrush rests snugly and smoothly against the tooth to be cleaned. The inclination of the working surface of the bristle field in the opposite direction to the tilt of the bristle field main axis helps the user to put the working surface correctly onto the teeth and to bring the working surface into snuggly fitting contact with the teeth surface despite the tilt of the bristle field main axis.

The said bristle field main axis basically extends parallel to the longitudinal axis of the bristles or bristle tufts when all bristles or bristle tufts extend in the same direction. Nevertheless, even if some of the bristles or bristle tufts are arranged at an inclination to other bristle tufts, there is still a bristle field main axis. In such a case where the bristle field includes tilted bristle tufts, the bristle field main axis is in parallel with the longitudinal axis of the majority of bristle tufts. For example, if inner bristle tufts extend in parallel with each other, whereas some outer bristle tufts are inclined to diverge from each other, the bristle field main axis is still in parallel with the longitudinal axis of the inner tufts. Moreover, even if the bristle field includes a plurality of differently inclined bristle tufts, there is still a bristle field main axis which is defined to have the minimum angular deviation from all bristles and the longitudinal axis thereof, thus representing a sort of average axis of longitudinal extension which can be determined, for example, by replacing the axes of each pair of neighboring tufts by a replacement axis inclined to each of said neighboring tufts at the same angle, and repeating such replacement steps with the replacement axes until only one last replacement axes is achieved.

The aforementioned plane lying onto the working surface and sloped and inclined to the said bristle field main axis corresponds to the working surface if the bristle field has a flat working surface. In case the working surface is slightly concave, the said plane lying onto the working surface is defined by the outer bristle tufts forming the edge of the concave working surface so that the aforementioned plane is a sort of cover plane. Additionally or in the alternative, the said plane lying onto the working surface can be determined to represent an average slope of the working surface when viewing the bristle field in a direction perpendicular to the longitudinal axis of the tooth brush and perpendicular to the aforementioned bristle field main axis. In particular, the plane lying on the working surface may correspond to a plane tangential to the concave working surface in the deepest point thereof.

In a further aspect of the invention, the bristle support with the bristle field arranged on it is tilted relative to the toothbrush or brush head longitudinal axis in such a way that the main axis of the bristle field which extends at right angles to the surface of the bristle support and/or parallel to the majority of bristle tufts is inclined at an angle of between about 2.5° to 25°, in particular between 3° and 17°, to a perpendicular drawn upon the toothbrush or brush head longitudinal axis. Already at relatively small angles of tilt of more than 2.5°, preferably more than 3°, the problematical nature of the buckling column during the poking motion of the bristle field and the resultant high prodding forces can be reduced significantly which conveys a pleasant brushing sensation. On the other hand, in cases where the bristle supports are not too sharply tilted there results the desired centering motion which, at angles of tilt exceeding 17° and in any case 25°, would experience a steep decline which would render the handling of the toothbrush difficult.

In particular said angle of inclination of the main axis of the bristle field to the perpendicular upon the toothbrush or brush head longitudinal axis may amount to 8° +/- 3°, whereby a particularly good compromise is achieved between a gentle brushing sensation on the one hand and ease of handling with high brushing performance on the other.

In order to reduce the usual disagreeable side effect of the poking motion, i.e. dancing around of the bristle field, the working surface is inclined in opposite direction to the tilt of the bristle support as mentioned before. This enables the bristle support to be provided with a more pronounced tilt at a more pronounced inclination of the bristle field main axis, which in respect of the seating engagement of the bristle field with the tooth surface is compensated for by the inclined position, in opposite direction, of the working surface of the bristle field. By providing the working surface with a slant not parallel to the bristle support surface, the working surface of the bristle field continues to rest snugly against the tooth surface even if the bristle field with its main axis exhibits a more pronounced tilt.

In this arrangement, the slant of the working surface of the bristle field may generally vary, with "slant" not necessarily meaning an inclined plane. Rather, a curved working surface, in particular a working surface curved in groove shape, may be provided, the term slant then being understood to mean a groove configuration differing in height towards different sides, or the slant being understood to mean a secant or tangent or some other surface inclination reflecting or characterizing the surface shape by approximation.

In a preferred further aspect of the invention, the angle of the inclination of the working surface, which defines in the aforesaid manner the slant also of a curved surface, where applicable, relative to a perpendicular upon the bristle field main axis is smaller than the angle of inclination of said bristle field main axis to a perpendicular upon the toothbrush or brush head longitudinal axis. If the bristle support with the bristle field affixed to it is tilted in such a way that the bristle field main axis is inclined at an angle of 8° +/- 3° to the perpendicular upon the toothbrush or brush head longitudinal axis, in an advantageous embodiment of the invention the slant of the working surface of the bristle field may have an angle of inclination of between 1.5° and 4.5°, in particular about 3.5° +/-1°, relative to a perpendicular upon the bristle field main axis. A very gentle brushing sensation on the one hand and ease of handling with self-centering effect as well as a high cleaning performance on the other hand are thereby achieved.

In a further aspect of the invention, the angle of inclination of the working surface of the bristle field relative to the perpendicular upon the bristle field main axis amounts to between about 25% and 65%, preferably about 40%, of the angle of inclination of said bristle field main axis relative to the perpendicular upon the toothbrush longitudinal axis.

The bristle support may be generally tilted to different sides. For example, it would be generally possible to tilt the bristle support towards the toothbrush handpiece so that, as seen looking from the toothbrush handpiece, the surface of the bristle support carrying the bristles can be seen.

In a preferred enibodiment of the invention however, the bristle support is tilted away from the toothbrush headpiece, such that an obtuse angle is provided between the bristle field main axis and a section of the toothbrush or brush head longitudinal axis on the side close to the toothbrush handpiece. In other words, given a horizontal orientation of the toothbrush longitudinal axis, an end of the bristle support on the side close to the toothbrush handpiece or a portion of the bristle field arranged there lies at a higher level than an end of the bristle support on the side remote from the toothbrush handpiece or a portion of the bristle field arranged there.

The bristle support and/or the bristle field may generally have various outer contours, with the bristle support being in particular of a round configuration. In a particularly advantageous further aspect of the invention however, the bristle support is not circular but of a shape deviating from the circular. In particular the bristle support may be of an oval or elliptical configuration or slightly flattened in a similar way. Alternatively or in addition, at least the outer row or the outer ring of bristle tufts may be arranged on an oval or on an ellipse or on a ring flattened in similar manner.

As seen looking at the top of the bristle support, the bristle tufts are advantageously arranged symmetrically relative to the main axes of the bristle support and/or rotationally symmetrically, in particular in such a way that the bristle tufts or their points of attachment on the bristle support are engageable one into the other by a turn through 180 degrees.

Alternatively or in addition, the bristle field may however have an asymmetrical contour as seen in a side view, in particular in a direction transverse to the toothbrush longitudinal axis, particularly in such a way that the height profile rises more intensively towards one side than towards the other side so that the working surface of the bristle field as defined by the free ends of the bristles exhibits a slant and does not extend parallel to the bristle support surface.

In a further aspect of the invention, the bristle field has a central depression in the working surface defined by the free ends of the bristle tufts, which advantageously may have a groove-shaped bottom curved in one direction and substantially straight in the direction perpendicular thereto. Through such a substantially uniaxially curved depression in a middle portion of the bristle field or its working surface, it is possible to achieve not only a better holding of the dentifrice or a similar, gel-type dental cleansing agent but above all a better cleaning effect on the teeth accompanied by a more agreeable, gentler cleaning sensation. The contour of the working surface, which rises to opposing circumferential sides, nestles better against the lateral tooth flanks which, so to speak, are enveloped in a snug fit so that in particular the sections of the tooth flanks adjoining the interproximal spaces are better cleaned.

Unlike bristle fields with plane depressions in the middle, it is not necessary for the innermost, i.e., central tufts, to bend away first. Rather, the bristle tufts rest in a snug fit against the lateral flanks of the teeth without bending away. In addition, a gentler cleaning sensation results, in particular when moving the brush head from one tooth to the next, because due to the varying tuft height also in the central area individual tufts are pushed away in succession when the brush sweeps over a tooth flank, the brush head being pushed, so to speak, along the curved surface of the depression around the flank of the next tooth without the brush head falling so to speak into the depression. In particular with rotational driving of the bristle field there results in addition a gentle wiping motion because the tufts hugging the tooth flank are more intensively bent as the distance from the axis of rotation increases.

The groove-shaped curvature of the depressed, central portion of the bristle field surface can be achieved generally in a variety of ways. For example, a correspondingly curved bristle support could be provided while the tufts are of uniform length. However, in a further aspect of the invention the tufts and in particular the inner lying tufts vary in their length such that they define with their free ends said groove-shaped curvature. In particular the length of the inner lying tufts can increase in the direction of the curvature of the working surface defined by the free ends with increasing distance from a center point of the bristle support, such as to define said groove-shaped curvature of the central depression. Through such a varying length of the tufts it is possible to achieve a gentle cleaning sensation and a gentle movement of the bristle field over the teeth because the further projecting bristles are able to bend away more easily on account of their greater length.

In order to obtain a most continuous curvature of the surface of the central depression, the free ends of the inner tufts, which define said working surface in the region of the depression, do not have end surfaces extending parallel to the bristle support but end surfaces which are inclined at an acute angle to the surface of the bristle support, with different inner tufts having differently inclined end surfaces, such that the differently inclined end surfaces define in mutual complementation the path of said groove-shaped contour of the central depression. In particular the inclination of the end surfaces of the free ends of the tufts can be made increasingly more pronounced as the distance of the tufts from the center of the bristle support increases, thus resulting in an increasingly steeper wall of the groove-shaped bottom in the direction of the circumferential edges of the bristle field.

Generally the tufts may form a plane surface at their free ends. In this case the inner tufts define said groove-shaped curvature so to speak in the form of a chine-type construction with a slant increasing in steps from tuft to tuft.

However, in a preferred further aspect of the invention, the free ends of the inner tufts can have at their free ends an end surface which is not plane but arcuately curved such that the mutually complementing free ends of neighboring tufts define a continuously curved enveloping surface which forms the previously mentioned groove-shaped depression. The curved end surfaces of the individual tufts are advantageously uniaxially curved, i.e., they are in themselves already curved in groove shape, so that they run in a straight line in one direction while having a curvature in a direction perpendicular thereto.

The groove-shaped curved bottom of the central area of the working surface of the bristle field can be generally of a asymmetrical configuration, i.e., extending substantially parabolically. In this case the inner tufts rise with their free ends at a substantially equal rate to opposing circumferential sides of the bristle field. In an advantageous further aspect, the groove-shaped curvature may also be part of a cylinder shell whose radius of, for example, 10 to 14 mm determines the shape of the groove-shaped curvature.

In a further aspect of the invention provision can also be made advantageously for an asymmetric path of the curvature of the central depression in the working surface of the bristle field, in which case in particular a banana-shaped groove curvature can be provided. In this arrangement, the tufts defining the central depression in the working surface of the bristle field rise unequally to opposing circumferential sides so that the one upper edge of the groove-shaped depression is higher than the opposing edge. Among other things, this can be used, for example, to compensate for the tendency of users to position the brush head against the tooth flanks in a not exactly tangential but in a slightly V-shaped orientation.

Advantageously, said asymmetric gradient is oriented in the above-mentioned manner in a direction opposite the tilt of the bristle support or the bristle field main axis.

To achieve an even more greatly improved interproximal cleaning effect, in a further aspect of the invention the outer, longer or higher tufts have at least one bevel on their free end surfaces. In particular the lateral edges of the end surfaces can be beveled in the manner of a chamfer. On the one hand said longer outer tufts can better penetrate into the interproximal spaces. On the other hand the brush head can be moved more easily and more gently from one tooth to the next because the bevels of the circumferentially outer lying tufts raise the bristle field so to speak in the manner of a wedge-shaped inclined surface onto the next tooth flank.

In this arrangement, the outer, longer tufts can be generally beveled towards both the inner side and the outer side. However, in an advantageous embodiment of the invention, only one bevel is provided on one of the sides of the respective tuft so that a sufficiently wide, non-beveled end surface remains, as a result of which a cleaning effect is achieved equally in the interproximal spaces and on the tooth flanks.

In a particularly advantageous further aspect of the invention, the outer edges of the free ends of the tufts, i.e., the edges facing away from the inner tufts, are beveled. As a result, the brush head can be pushed particularly gently from one tooth to the next.

Advantageously, the inner-side plane surface of the outer tufts is vertically offset relative to the inner tufts forming the groove-shaped depression, thereby forming a jump in height from the central depression to the longer bristles at the edge. This enables a high self-centering effect to be accomplished on the one hand while achieving a particularly effective interproximal cleaning effect on the other hand.

Alternatively or in addition, the inner-side edge of the end surface of said outer, longer tufts can also be beveled. As a result, the working surface of the bristle field rests with a particularly snug fit against the round-bodied tooth flanks. The inner side bevel is a continuation, so to speak, of the groove-shaped curved depression in the center of the working surface of the bristle field.

Depending on the application and configuration of the tufts, the bevel on the circumferential, longer tufts can be variously pronounced. A good cleaning effect both between the teeth and on their surfaces can be achieved when said bevel of the circumferential tufts is inclined at an angle of approximately 20° to 60 relative to the non-beveled end surface of said tuft. Generally, the depth of the bevel can be variously selected, with an advantageous compromise between easy entry into the interproximal spaces and remaining cleaning capability on the tooth flanks being accomplished if said bevel extends over approximately 25% to 75% of the width of the tuft at its end. In this context, "width" is understood to mean the dimension of the tuft vertically to its longitudinal axis and transversely to the longitudinal direction of the bevel.

Particularly effective are the circumferential, longer outer tufts, in particular in combination with said bevels, when said tufts are inclined at least with their outer side towards the outer circumferential side at an acute angle relative to a vertical on the bristle support, and this preferably at an angle in the range from 1.5° to 15°, preferably 3° to 10°, approximately. As a result the tufts acquire a reduced resistance to buckling in one direction during the to and fro motion of the brush head, thus giving rise to better insertion into the interproximal spaces.

In an advantageous further aspect of the invention, said longer outer tufts have a cross-sectional area that grows larger towards their free ends and/or lateral flanks that spread apart as they progress from the bristle support. In particular said circumferential outer tufts can be trapezoidally shaped as seen in a longitudinal sectional view, such that the free ends of the tuft are wider than its base on the bristle support. On the one hand, such a trapezoidal configuration lends the tufts a larger working surface on their free ends. On the other hand, the fan-type spreading apart enables the bristles within a tuft to move relative to each other with greater ease, which results on the whole in a better adaptation to the tooth contour and an improved cleaning performance. In particular with lateral bevels of the free ends of the tufts, said tufts acquire favorable geometrical proportions with more tangible edges which nestle better against the boundary contours of the teeth.

The trapezoidal configuration of the outer, longer tufts is advantageously asymmetric in relation to a vertical on the bristle support. In particular an inner flank of said tufts, which faces the inner tufts, can extend substantially vertically to the surface of the bristle support while an outer side of the respective tuft, which faces away from the inner tufts, is inclined towards the outer side at an acute angle to a vertical on the bristle support. Accordingly, the outer flanks stand off outwardly at an angle while the inner flanks stand straight, that is, they are aligned substantially vertically to the bristle support surface.

On the elongated bristle tufts, the previously mentioned bevel on the free end of the tuft extends advantageously parallel and/or tangentially to the longitudinal axis of the elongated end surface of the tuft.

In an advantageous further aspect of the invention, longer outer tufts are provided on the outer circumference in opposing circumferential sectors on opposing circumferential sides so that the central depression in the working surface of the bristle field extends between the opposing longer circumferential tufts. In this arrangement, the longer, outer tufts are advantageously not provided along the entire circumference of the bristle field but only in limited angular sectors of preferably less than 60° per sector angle, whereas no longer, elevated outer tufts are positioned circumferentially in intermediate sectors in which the groove-shaped curved depression in the central area is at its deepest. The groove-shaped central depression extends, so to speak, transversely across the entire bristle field. In said sectors in which the groove-shaped depression is at its deepest, the outer circumferential tufts are adapted to the configuration of the groove-shaped depression contour or they form part of it.

The brush head can be generally driven in a variety of ways. Different drive kinematics can be implemented depending on the configuration of the toothbrush and its drive. In an advantageous further aspect of the invention, the driving motion comprises an oscillatory rotational motion about an axis of rotation which extends through the bristle support. In an advantageous embodiment of the invention, said axis of rotation can extend vertically to the plane of the bristle support through its center point or center of gravity.

However, according to an alternative advantageous embodiment of the invention, it is also possible for the axis of rotation to be positioned eccentrically so that motion components of different magnitude are generated on different circumferential sides of the bristle field. In an advantageous further aspect of the invention, the eccentricity applies to the longer, outer tufts, that is, the axis of rotation is displaced parallel to a connecting line through the opposing, outer, longer tufts. Depending on the configuration of the bristle field, the eccentricity can be variously pronounced, with a good compromise between cleaning movements of desirably different size on different circumferential sides on the one hand and still tolerable vibrating movements on the other hand being achieved when the axis of rotation divides a diameter line of the bristle support in a length ratio of 55% to 45% up to 70% to 30%.

Alternatively or in addition, it is possible for the axis of rotation of the bristle support to be inclined at an acute angle to the plane defined by said support, with the angle of inclination being preferably in the range from 89° to 65°, in particular 88° to 82°, relative to the plane of the bristle support. As a result it is possible, in conjunction with the groove-shaped curved surface profile of the bristle field, to superimpose a poking motion upon the rotary motion. Preferably, the axis of rotation is tilted such that the bristle field is tilted away from the handpiece of the toothbrush.

Given a rotary oscillation of the bristle field, in an advantageous further aspect of the invention the end surface of the circumferentially outer, longer tufts, which looks elongated in the plan view, extends in an arc about the axis of rotation, in particular in a circular arc about the axis of rotation.

In a further aspect of the invention, the previously mentioned bevels on the outer ends of the longer, outer tufts can nevertheless extend in a straight line, preferably substantially tangentially to the arcuately curved, elongated end surface of the tufts. On the one hand this simplifies the production of the tufts. On the other hand this results in a circumferentially varying width of the bevels and, concomitant thereto, of the non-beveled end surfaces, which in the manner of wedge surfaces can cause the corresponding tufts to be continuously inserted into and withdrawn from the interproximal spaces.

However, according to an alternative advantageous embodiment of the invention it is also possible for the bevels to extend equally in an arcuate curve around the axis of rotation, in particular such that the bevels and/or the remaining, non-beveled end surfaces of the tufts have a contour and width that is constant in circumferential direction. As a result it is possible to achieve a particularly gentle contacting of the tufts with the tooth flanks and a favorable penetration into the interproximal spaces.

The outer, longer tufts enclose the inner tufts along a distance covering 25% to 75%, approximately, of the circumference of the bristle field or the bristle support.

The inner tufts, which with their free ends define said central depression in the working surface, can form with their free ends a substantially continuous surface such that an in actual fact continuous groove-shaped depression results. On the one hand, it is thus possible to achieve a nestling around the full surface of the tooth flanks and hence a cleaning effect covering a large area. On the other hand, it has a beneficial effect on the positioning of the dentifrice or the tooth cleaning agent, which is held better on the working surface of the bristle field and does not flow so easily between the tufts down onto the bristle support.

In an alternative, advantageous further aspect of the invention, said inner tufts can form with their free ends separate end surfaces, as a result of which a better discharge of dislodged debris is achievable.

To reduce the prodding motions against the gums still further and create a particularly agreeable brushing sensation, the bristles provided in the bristle field, advantageously only part thereof, may have their ends fanned. As a result, the bristle tips have several fraying thin ends providing a large area for snugging up against the tooth surfaces. To achieve an adequate cleaning action, such fanned bristles are mixed with non-fanning bristles.

In a further aspect of the invention, the corresponding bristles, that is, the fanning bristles, may be of the self-fanning type, such that the cleaning forces acting on the bristles during normal cleaning lead to a splitting open of the bristle at its free end. This obviates the need to provide complex splitting processes and corresponding splitting machines for manufacturing the toothbrush.

The fanning bristles with the laterally protruding longitudinal ribs are grouped advantageously in corresponding tufts with non-self-fanning bristles such that a mixture of fanning and non-fanning bristles exists in the corresponding tuft. This enables a good nestling of the bristles around the tooth surface, a good distribution of cleaning agent and an agreeable cleaning sensation to be combined with a high cleaning performance with regard to the removal of plaque. Also, a high density of bristles can be achieved in a tuft and hence on the bristle support of the brush head.

In particularly advantageous manner, the mixed tufts comprising both fanning bristles with lateral longitudinal ribs and normal bristles devoid of longitudinal ribs are arranged in an inner area of the bristle field of the brush head while tufts comprising non-fanning bristles are provided on an outer edge of the bristle field, in which arrangement said outer tufts can have advantageously a greater length and/or height and/or diameter than the inner lying tufts, such that a particularly effective cleaning of the interproximal spaces can be achieved with said outer tufts made of non-fanning bristles. At the same time, the fanning bristles in the inner area of the bristle field ensure an effective cleaning of the tooth flanks.

In an advantageous further aspect of the invention, the bristle body including its core section is free of points of preferred breaking, i.e., it has advantageously a homogeneous material structure and microstructure over its entire cross-section.

The self-fanning construction can be achieved generally in a variety of ways. In an advantageous further aspect of the invention, the bristles are shaped in a special configuration. In particular the bristle body can be shaped such that longitudinal ribs of a suitable configuration protrude laterally, which then split open at the bristle ends under the action of the cleaning forces.

The body of such a bristle may generally have a varying number of longitudinal ribs. In an advantageous embodiment of the invention, in particular three or four longitudinal ribs are provided.

The longitudinal ribs of the brush body generally can have different geometries. In a particular advantageous embodiment of the invention, the cross-section of the bristle body is in actual fact cloverleaf-shaped and/or the longitudinal ribs have an outer contour which corresponds to a pitch cylinder.

Alternatively however, the longitudinal ribs can have other outer contours. For example, the outer contours can correspond to pitch cylinders having a triangular cross-section, a rectangular cross-section, a rhombic cross-section or a hexagonal cross-section.

Advantageously, all the longitudinal ribs have a mutually identical outer contour in order to achieve uniform fanning.

Said bristles with longitudinal ribs can be generally added in a varied mixture ratio to the non-fanned, normal bristles. Depending on the application it is possible to use more fanning bristles or more non-fanning bristles. A good compromise with regard to the removal of plaque on the one hand and to hugging the tooth surfaces and distributing the cleaning agent on the other hand is achieved in a further aspect of the invention by using 50% +/-10% self-fanning bristles with laterally protruding longitudinal ribs on the one hand and 50% +/-10% non-fanning normal bristles on the other hand per mixed tuft.

Generally, the non-fanning bristles can have various cross-sectional geometries. Advantageously, they are devoid of longitudinal ribs, with a basic geometrical cross-sectional shape such as rectangular or hexagonal. The bristles provided as non-fanning bristles are in particular bristles with a round, in particular circular, cross-section.

Particularly advantageous is the use of said fanning bristles in a bristle field on which tufts of a large cross-sectional area are concentrated at the outer edge of the bristle field and/or in its central area and tufts of a small cross-sectional area are provided between said large-area tufts at the edge and in the center on a middle ring of tufts. In particular within the elongated tufts on the outer ring there are arranged on a middle ring several tufts having a cross-section smaller than the cross-section of the elongated tufts, and within these small tufts on the middle ring there is provided at least one tuft with a cross-section larger than the cross-section of the tufts on the middle ring. By virtue of this rhythmic alternation of tuft cross-sections from inside to outside, it is possible to achieve a high bristle density and to better prevent a collision of the fastening means. Furthermore, advantages also arise with regard to the cleaning effect. Among other things, the dentifrice usually applied in the center of the bristle field is held better on the working surface.

Advantageously, the tufts of said middle ring and the innermost tufts are equipped with said fanning bristles.

In a further aspect of the invention, bristle tufts of various cross-sectional shapes are arranged on the at least one middle ring of bristles. In particular on said at least one middle ring bristle tufts may be provided which have an approximately square tuft cross-section. Alternatively or in addition, said middle ring may also include bristle tufts with a round cross-section, in particular a circular cross-section. If both angular, in particular square, and round, in particular circular bristle tufts are arranged on said middle ring, they are advantageously concentrated in different sectors each. To do this, a variety of options exist in general. According to one advantageous embodiment of the invention, round bristle tufts are arranged on the middle ring in opposing sectors, which in the non-deflected neutral position of the bristle support contain the toothbrush longitudinal axis. By contrast, the angular bristle tufts of the middle ring are advantageously arranged in opposing sectors of the bristle support which in the bristle support's neutral position are arranged symmetrically to a transverse axis.

Regardless of their different cross-sectional shapes, the bristle tufts of the middle ring have at least by approximation roughly the same area of cross-section, with the areas of cross-section varying in a range of preferably less than +/-25%.

Compared to the areas of cross-section of the bristle tufts of the middle ring, the outer, elongated bristle tufts on the outer ring and, according to another embodiment, also the at least one innermost tuft in the center of the bristle field have an area of cross-section at least twice as large. In this arrangement, on the outer ring of the bristle field there may be arranged advantageously several opposite lying pairs of elongated bristle tufts. For improved adaptation of the bristle configuration to the different cleaning tasks in different areas of the bristle field, said outer ring may include differently designed pairs of elongated bristle tufts which differ in respect of their bristle length and/or height and/or cross-sectional area.

Various configurations are generally possible in this context. According to an advantageous embodiment of the invention, opposing sectors of the bristle support, which in its non-deflected neutral position contain the toothbrush longitudinal axis, include longer bristle tufts and/or elongated bristle tufts of greater cross-sectional area than the tufts in sectors oriented at right angles thereto in a direction transverse to the toothbrush longitudinal axis.

In addition to the elongated bristle tufts, the outer ring may advantageously provide further bristle tufts of a not elongated contour, which advantageously may have an approximately round or square cross-section of a cross-sectional area smaller than the cross-sectional area of the elongated bristle tufts.

In an advantageous further aspect of the invention, the central area of the bristle field includes two equally elongated bristle tufts whose longitudinal axis, that is, the longitudinal dimension of the elongated cross-section, is aligned parallel to a main axis of the bristle support. In particular said innermost bristle tufts may have their longitudinal axes oriented parallel to the toothbrush longitudinal axis in the non-deflected neutral position of the bristle support and/or oriented towards the elongated bristle tufts of the outer ring which on the outer ring have the greatest height and/or greatest cross-sectional area.

### BRIEF DESCRIPTION OF THE DRAWINGS

These and further features of the invention which, when used singularly or in any subcombination irrespective of their summary in the claims, may form the subject-matter of the present invention will become apparent not only from the claims but also from the subsequent description and the accompanying drawings explaining preferred embodiments of the invention in greater detail. In the drawings,
- FIG. 1: is a schematic side view of an electric toothbrush having a rotationally drivable brush head according to a preferred embodiment of the invention;
- FIG. 2: is a top plan view of the brush head of the toothbrush of FIG. 1;
- FIG. 3: is a longitudinal sectional view of the brush head taken along the line B-B of FIG. 2 parallel to the longitudinal axis of the toothbrush;
- FIG. 4: is a longitudinal sectional view of the brush head of FIG. 2 taken along the line A-A of FIG. 2;
- FIG. 5: is an enlarged side view of one of the outer, longer bristle tufts of FIG. 3 in an enlarged schematic representation showing the bevel angles of the tuft;
- FIG. 6: is a schematic cross-sectional view of a self-fanning bristle according to an advantageous embodiment of the invention having three laterally protruding longitudinal ribs;
- FIG. 7: is a schematic cross-sectional view of a self-fanning bristle according to another advantageous embodiment of the invention having four laterally protruding longitudinal ribs;
- FIG. 8: is a fragmentary schematic view of the toothbrush head of the toothbrush of the preceding Figures, showing the tilting of the bristle support as well as the inclination of the working surface of the bristle field in opposite direction, with the brush head being illustrated as positioned against a tooth during brushing;
- FIG. 9: is a schematic view of the resulting velocity or kinematical relationships during a bristle's poking motion, showing in the partial view (a) a bristle standing perpendicularly on the tooth surface, while the partial view (b) shows a bristle positioned at a slant as a result of the titling of the bristle support;
- FIG. 10: is a schematic view of the deflecting movement of a bristle as it is positioned against a tooth surface, with the partial views (a) and (b) showing a bristle as positioned perpendicularly against the tooth surface, whilst the partial views (c) and (d) show a bristle positioned at a slant according to the invention, in which the bristle bends away instead of presenting the buckling column case;
- FIG. 11: is a schematic vie of the cleansing effect of a bristle in flexed condition, with the partial view (a) showing the cleansing effect of a bristle not driven in a poking motion, whilst the partial view (b) shows the cleansing effect of a bristle driven in a poking motion; and
- FIG. 12: is a fragmentary schematic view of the toothbrush head of the toothbrush similar to FIG. 8 according to a further embodiment of the invention, showing the tilting of the bristle support, with the axis of rotation being eccentrically arranged relative to the bristle field main axis according to the partial view 12(a) and being tilted according to the partial view 12 (b).

### DETAILED DESCRIPTION OF THE INVENTION

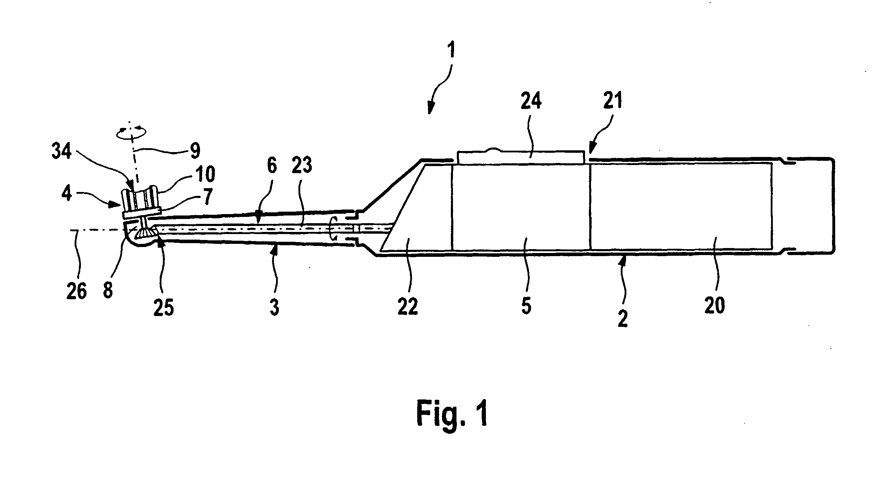

The toothbrush 1 shown in FIG. 1 comprises a handpiece 2 and a brush head 4 adapted to be coupled to it. To be more precise, the brush head 4 is adapted to be coupled to a neck 3 of the toothbrush 1 connected to the handpiece 2 preferably by positive-engagement connecting elements, said neck being constructed in the form of a hollow brush tube. However, it would also be possible for the brush head 4 to comprise said neck 3 or at least part of it and to be adapted to be coupled with it to the handpiece 2.

The handpiece 2 accommodates in its interior an energy source 20, preferably in the form of a rechargeable battery, a motor 5, preferably in the form of an electric motor, and a control device 21.

In the embodiment shown, the rotary motion of the motor 5 is translated by means of a gearing 22 into an oscillatory rotational motion of a drive shaft 23 which extends through the neck 3 to the brush head 4. The toothbrush 1 can be activated and deactivated with a switch 24 mounted on the handpiece 2.

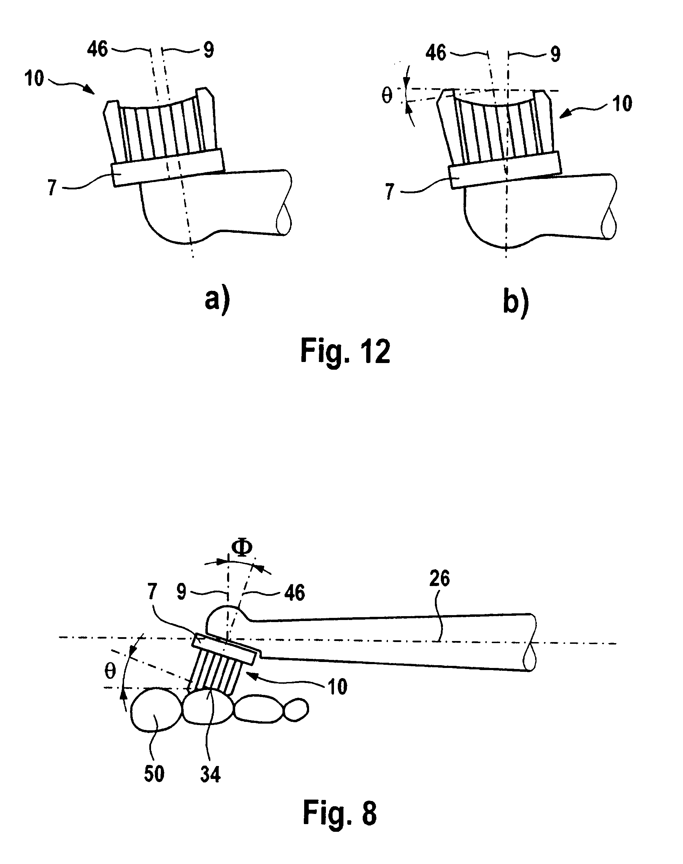

In known manner using a suitable gearing (a bevel gearing 25 unlike in the shown embodiment), at the end of the drive shaft 23 the brush head 4 is made to make an oscillatory rotational motion about an axis of rotation 9 which extends substantially in a direction transverse to the toothbrush longitudinal axis 26. As this occurs, the angular range swept by the bristle support 7 of the brush head 4 has a value advantageously in the range of ± 35° ± 5°, approximately, with an oscillation in the range from ±10° to ± 100° being also possible. The oscillation frequency can vary and lie, for example, between 10 Hz and 100 Hz. In the embodiment shown in FIG. 1, the axis of rotation 9 forms a right angle with the toothbrush longitudinal axis 26. In addition, a drive of the brush head 4 is provided in a third dimension for its pulsing motion substantially (depending on whether or not further spatial motion components are added resulting from additional tilts of the brush head, where applicable, depending on the pivot position) in the direction of the axis of rotation or oscillation 46 or in the direction in which the bristle extends. In a special case, the poking axis 48 is thus identical with the axis of oscillation 46, and in other cases it is arranged at an inclination (at an acute angle thereto) or roughly perpendicularly to the toothbrush longitudinal axis 26. whichever the case, the brush head is driven towards the tooth in an additional poking motion. In the embodiment shown in FIG. 1, the axis of rotation 9 forms an obtuse angle with the toothbrush longitudinal axis 26 because the brush head is arranged at a tilt away from the handpiece 2, as will be explained further below with reference to FIG. 8.

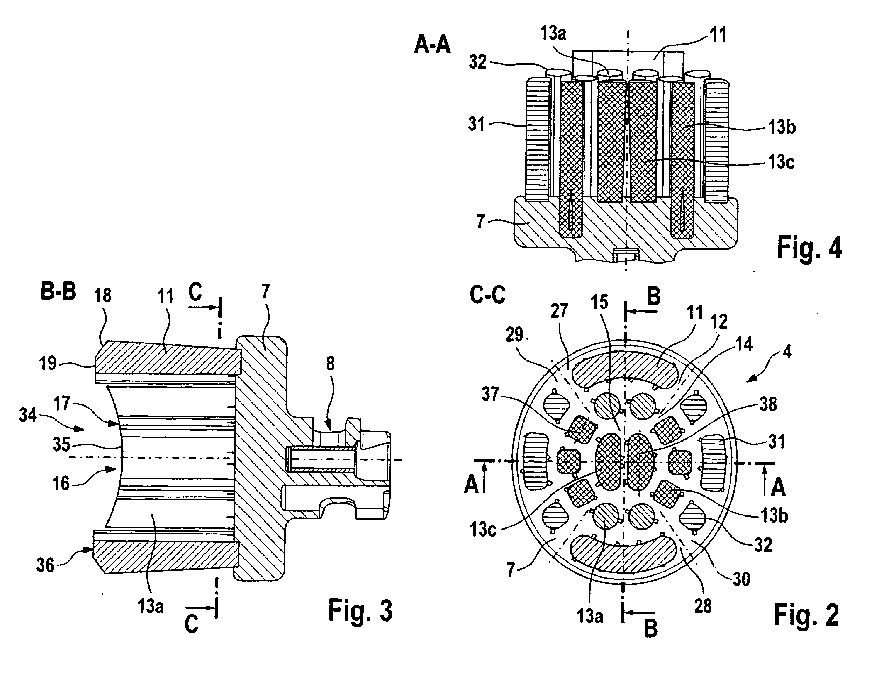

A preferred embodiment of the brush head 4 of the toothbrush 1 is shown in FIGS. 2 to 5. In this embodiment, the bristle support 7 is round, however advantageously not circular but slightly oval and/or elliptical, with the longer axis of the oval or the ellipse in the neutral position of the bristle support 7 extending parallel to the toothbrush longitudinal axis 26, and the shorter axis of the oval or the ellipse extending in a direction transverse to it. In FIG. 2 the longer axis of the oval or the ellipse is parallel to the line B-B.

Arranged on the bristle support 7 is a plurality of bristle tufts which are arranged in several rings 12, 14 and 15 and spread over the bristle field 10. Positioned on an outer ring 12 in the embodiment of FIG. 2 are eight tufts, of which four have an elongated contour while another four have a - roughly speaking - round or equilateral cross-sectional contour. The length of the tufts on said outer ring 12 varies, as will be explained in more detail, with - roughly speaking - longer tufts being provided generally in opposing sectors 27 and 28, which in the initial position of the bristle support 7 contain the toothbrush longitudinal axis 26, than in sectors 29 and 30, which are orientated in a direction transverse thereto or lie in between, cf. FIG. 2.

As FIG. 2 shows, the tufts 11 and 31 lying on the outer ring 12 on the main axes B-B and A-A, respectively, are elongated in the plan view while the tufts 32 lying in between have an approximately equilateral contour or an approximately cubic or round cross-section. Said elongated tufts 11 and 31 extend in an arcuate curve around the axis of rotation 9, cf. FIG. 2.

In this arrangement, the outer tufts 11 sitting on the longer main axis B-B extend over a circumferential section of approximately 50° to 90°, preferably approximately 70°, while the outer tufts 31 sitting on the shorter main axis A-A extend over a circumferential section of 20° to 45°, approximately, preferably 30°, approximately.

Positioned on a second ring 15 of tufts, seen from the outside, are a total of ten tufts 13a and 13b, of which some have a circular cross-section and others an angular cross-section. In particular tufts 13a with a circular cross-section are arranged, as shown in FIG. 2, in the sectors 27 and 28 in which the longer outer tufts 11 of the outer ring 12 lie, while angular tufts are provided in the intermediate sectors 29 and 30 of the bristle support 7 on the second ring 14. Also, the length of these tufts 13a and 13b on the second ring 14 varies cyclically from tuft to tuft along the circumference of the ring 14, in such a way that longer tufts are provided in said sectors 27 and 28 than in the sectors 29 and 30 lying on the short main axis.

The round bristle tufts 13a as well as the angular, approximately square bristle tufts 13b of the middle ring 14 have approximately at least about the same area of cross-section regardless of their different cross-sectional contour.

As FIG. 2 shows, to provide favorable space conditions for the securing of the bristle tufts, in a further aspect of the invention the angular bristle tufts 13b of the middle ring 14, at least some of them, may be turned at an acute angle relative to the main axes A-A and B-B of the bristle support 7 and also relative to the annular contour of the ring 14 on which they are arranged. Particularly at least one of the angular bristle tufts, preferably each second angular bristle tuft 13b, may have its main axis 37 turned in such a way that the main axis 37 of the bristle tuft cross-section is inclined at an acute angle to a tangent to the middle ring 14. This causes corresponding anchor plates to be turned out of the collision range of other anchor plates. In addition, the flexing action of the bristle field can be made more homogeneous on the whole and in particular less dependent on direction.

Finally, in an innermost area or in a third ring of tufts as seen looking from outside two elongated bristle tufts 13c are provided which extend with their longitudinal axis 38 parallel to the longer main axis B-B.

The innermost bristle tufts 13c have a cross-sectional area significantly greater than the bristle tufts 13a and 13b of the middle ring. In the embodiment shown, their cross-sectional area amounts to between 200% and 400% of the cross-sectional area of the bristle tufts 13a and 13b of the middle ring 14.

In this arrangement, the innermost bristle tufts 13c are of an elongated configuration so that their longitudinal dimension 38 amounts to more than 150% of their transverse dimension, preferably 150% to 300%, approximately. In the embodiment shown, the innermost bristle tufts 13c advantageously have an outer contour curved in convex shape while an inner contour is straight, with the inner and outer contours being advantageously connected by rounded end contours.

Advantageously, the innermost bristle tufts 13c have their longitudinal axes 38 aligned parallel to the main axis of the bristle support which in the non-deflected neutral position of the bristle support 7 extends parallel to the toothbrush longitudinal axis 26 or a longitudinal center plane passing therethrough.

As FIG. 3 shows, the tufts of the bristle field 10 have their free ends contoured or coordinated with each other with regard to their length and/or height, such that the working surface 34 of the bristle field 10 as defined by the free ends of the tufts has a central depression 16 with a groove-shaped bottom 17 which is curved in one direction and straight in a direction vertical to it. The curvature extends advantageously in the direction of the longer main axis B-B or in the direction of the toothbrush longitudinal axis 26 when the bristle support 7 is in its non-deflected neutral position. In a direction perpendicular thereto, which extends parallel to the shorter main axis A-A of the bristle support 7 and/or transverse to the toothbrush longitudinal axis 26 when the bristle support 7 is in its non-deflected neutral position, the depression 16 has a straight contour as shown in FIG. 3.

The central depression 16 can be constructed to be variously deep. In an advantageous further aspect of the invention, the deepest point of the depression 16 is set an amount of approximately 1 mm to 3 mm, preferably approximately 2 mm, deeper than the highest point of the bristle field 10. The groove-shaped contour of the bottom 17 of the depression 16 generally can have different curvatures. In the embodiment shown in FIGS. 3 to 5, a circular-arc-shaped contour with a curvature radius in the range from 8 mm to 17 mm, preferably approximately 11 mm to 14 mm, is provided, but this can vary depending on the dimensions and configuration of the bristle field.

As FIG. 3 shows, the end surfaces of the inner tufts 13a, 13b and 13c and the end surfaces of the shorter, outer tufts 31, which likewise combine to define the groove-shaped bottom 17, are not constructed as plane surfaces but are likewise in themselves curved in groove shape. The groove-shaped curved end surfaces 35 complement each other and in combination form said groove-shaped contour of the bottom 17 of the central depression 16. In concrete terms, the inclination of the end surfaces of the inner tufts 13 increases as the distance from the axis of rotation 9 in the direction parallel to the main axis B-B increases, cf. FIG. 3. In other words, the tufts arranged on the transversally extending main axis A-A are slightly curved at their free ends but nevertheless are aligned substantially parallel to the bristle support surface, while the inclination of the free ends increases as the distance from said main axis A-A increases.

As FIG. 3 also shows, the outer tufts 11 arranged on the outer ring 12 in the sectors 27 and 28 are extended relative to the other tufts or have a greater height such that they project beyond the other tufts. This results in a step in height relative to the central depression 16, cf. FIG. 3, that is, the central depression 16 in the embodiment shown in FIG. 3 does not merge smoothly with the end surfaces of said outer tufts 11.

Said outer tufts 11 in the opposing sectors 27 and 28, which in the neutral position of the bristle support contain the toothbrush longitudinal axis 26, have advantageously end surfaces 36 that comprise a flat section 19, which is aligned substantially vertically to the longitudinal axis of the tufts 11. as well as bevels 18, which bevel said end surfaces 36 towards the outside.

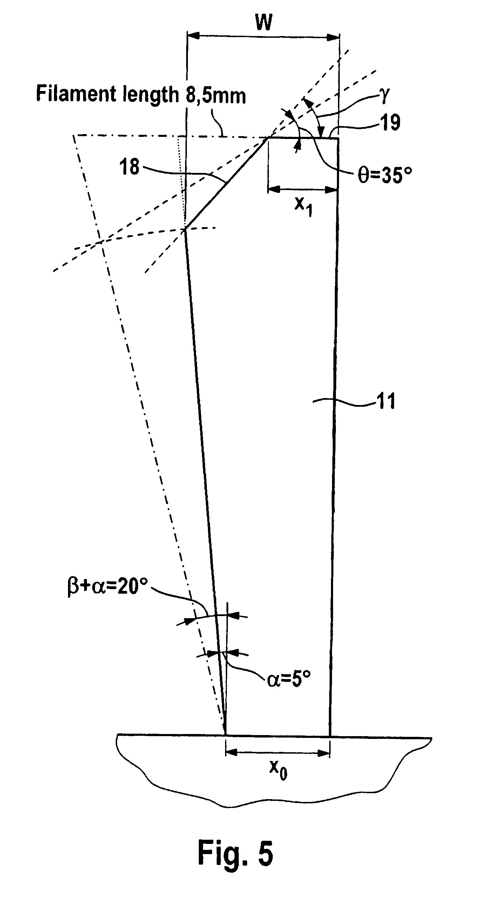

As FIG. 5 shows, said bevels 18 extend at an angle γ in the range from 20° to 60°, preferably 30° to 40°, approximately. The bevels 18 are advantageously so deep and wide as to cover approximately 25% to 75% of the width W of the respective tuft 11. In this case the width W is understood to be the dimension of the tuft vertically to its longitudinal axis and vertically to the longitudinal dimension of the bevel 18, in the region of the free end of the tuft, cf. FIG. 5. In the embodiment shown in FIG. 5, the bevel thus extends over approximately 1/4 to 3/4 of the width W.

Said longer outer tufts 11 are on the whole of a trapezoidal configuration as seen in their longitudinal section. While the inner lying flank of the tuft 11 extends substantially vertically to the plane defined by the bristle support 7, the outer lying flank is inclined towards a vertical on the bristle support 7 at an angle α of approximately 1.5° to 10°, preferably approximately 3° to 5°, such that the cross-section of the tuft 11 increases towards its free end, that is, the tuft becomes wider towards its free end. As a result, a large working surface is obtainable with a limited size of the bristle support 7. In addition, favorable geometrical proportions result at the free end of the tuft 11 in relation to its bevel 18.

In order to embrace the tooth flanks as completely as possible, to distribute the brushing pressure over a wide area and to hold dentifrice or the like on the working surface 34, the tufts occupy with their free ends advantageously at least 35% to 55%, preferably 50% or more of the area defined by the bristle support 7. As FIG. 2 shows, the tufts on the outer ring 12 can extend over a circumferential section of 200° to 300°, approximately, when the extension of all tufts is added together. The second ring 14 of tufts, seen from the outside, can extend likewise over a circumference of altogether 200° to 300°, approximately, when the extension of all tufts along the circumference is added together. The innermost tufts can cover with their free ends advantageously an area substantially closed over its full surface.

Advantageously, the tufts defining the central depression 16 are equipped at least partly with self-fanning bristles, whereby in particular the tufts 13a and 13b shown in FIG. 2 of the middle ring 14 and/or the innermost tufts 13c can comprise such self-fanning bristles.

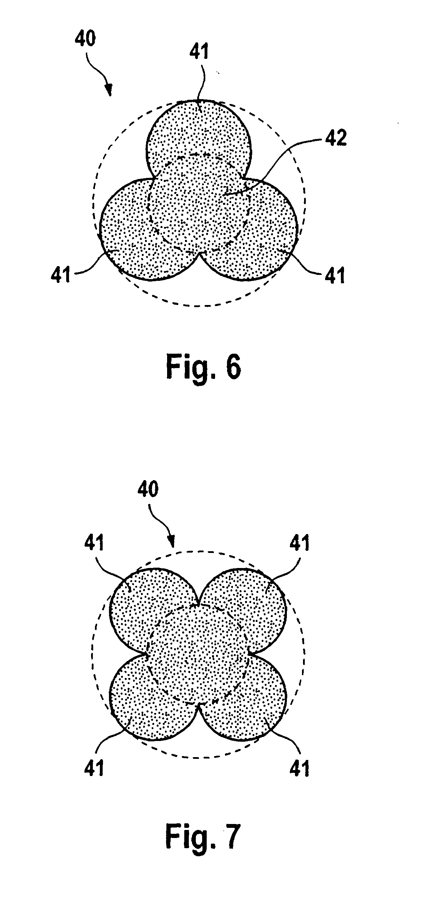

FIG. 6 shows a preferred embodiment of such a self-fanning bristle with a cross-section which generally remains constant over its length and is constructed advantageously to be cloverleaf-shaped, as shown in FIG. 6. The bristle body 40 comprises three laterally protruding longitudinal ribs 41 which protrude from a core section 42 in star shape towards the outer circumferential side. The longitudinal ribs 41 are spread evenly over the circumference. Advantageously, the longitudinal ribs 41 have an outer contour which corresponds to a section of a circular cylinder, approximately, or to some other rounded body.

FIG. 7 shows another embodiment of the bristle. The basic concept corresponds essentially to FIG. 6 so that corresponding reference numerals are used. FIG. 7 differs from FIG. 6 essentially in that instead of three longitudinal ribs 41 four longitudinal ribs 41 are provided and in that the brush body 40 therefore has the cross-section of a four-leaf clover. Here too the longitudinal ribs 41 are spread evenly over the circumference and are equipped with an outer contour which corresponds to a pitch cylinder.

Advantageously, the self-fanning bristles shown in FIGS. 6 and 7 in part in the previously mentioned tufts of the middle ring 14 and the innermost tufts 13c are combined with "normal", meaning non-fanning bristles, and this advantageously in a mixing ratio of 50 +/-10% to 50+/- 10%, approximately.

As best illustrated in FIG. 8, the bristle support 7 is tilted relative to the toothbrush longitudinal axis in a special way and the bristle field 10, to be more precise, its working surface 34 (shown here in contact with teeth) is provided with an inclination in opposite direction.

The bristle support 7 is tilted relative to the toothbrush longitudinal axis 26, which in assembled condition of the brush head 4 coincides with the brush head longitudinal axis, away from the toothbrush handpiece 2, so that the bristle field main axis 46 is inclined relative to a perpendicular upon the toothbrush longitudinal axis 26 at an angle of inclination Φ of preferably 8° +/-3°, approximately, as a result of which the bristle field 10 with its main axis 46 "looks away" from the toothbrush handpiece 2.

On the other hand, the working surface 34 of the bristle field 10, which is defined by the free ends of the bristles, is arranged at a slant, that is, it does not extend parallel to the surface of the bristle support 7, advantageously in such a way as to be inclined in opposite direction to the tilt of the bristle support. The angle of inclination θ of said working surface 34 relative to the perpendicular upon the bristle field main axis 46 is advantageously 3.5° +/-1°, approximately. In view of the fact that said working surface 34 is not plane but includes a groove-shaped curved depression in the manner identified in the foregoing and the bristle tufts arranged on the edge protrude, said inclination is understood to be the inclination of a plane applied by approximation on the working surface, which plane may be determined, for example, by the highest points on the working surface and/or by statistical averaging of the inclined sections.

As FIG. 8 shows, the tilting of the bristle field main axis 46 by angle Φ and the inclination θ of the working surface 34 in opposite direction make it possible on the one hand to achieve an inclined position of the bristle tufts relative to the tooth surface to be treated and to thereby largely avoid the buckling column case, while on the other hand the concave contour of the bristle field 10 or of its working surface 34 sits on the tooth surface with a snug fit, as a result of which the brush centers itself automatically.

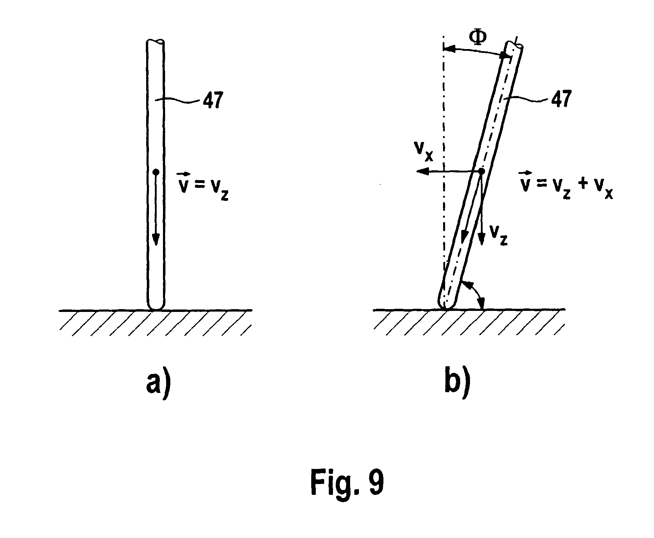

In this context, FIG. 9 illustrates clearly the resulting velocity or kinematical relationships. While FIG. 9 (a) shows a vertically standing bristle on which during a poking motion the velocity vector of the poking motion extends exactly in the longitudinal direction of the bristle, the partial view (b) shows a bristle positioned at a slant on which the poking motion possesses a vertical component relative to the tooth surface and a component parallel to the tooth surface. Corresponding reaction forces are thereby generated. While in the vertical case according to FIG. 9 (a) the reaction forces produced by the poking motion are introduced into the bristle vertically in the bristle longitudinal direction, in the slanting case according to FIG. 9 (b) a component of the reaction force is introduced which extends approximately transversely to the bristle longitudinal axis.

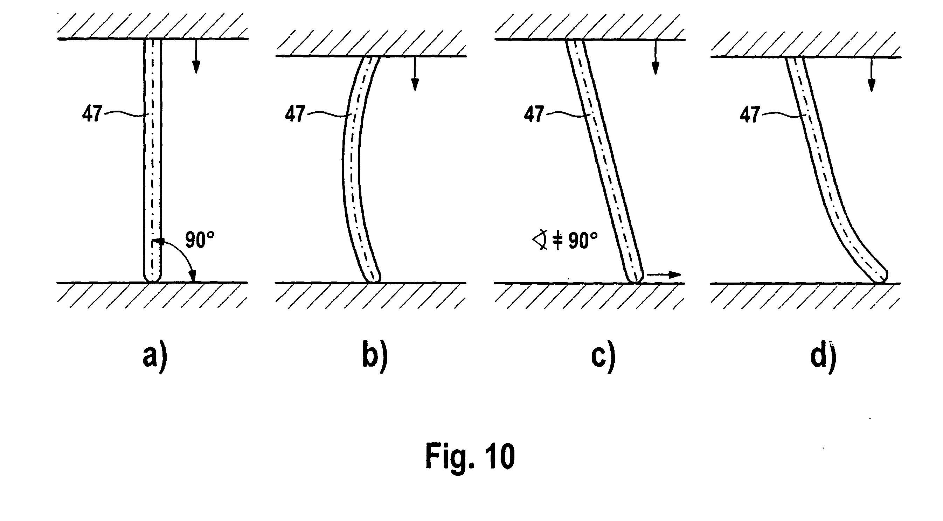

From this result the different buckling or bending cases of the bristle shown in FIG. 10. On the vertically standing bristles according to FIGS. 10 (a) and 10 (b) the bristle bulges similar to a buckling column, while on a bristle positioned at a slant according to the partial views 10 (c) and 10 (d) the bristle bends gently from its free end whereby the reaction force becomes significantly smaller, producing a significantly gentler cleaning sensation.

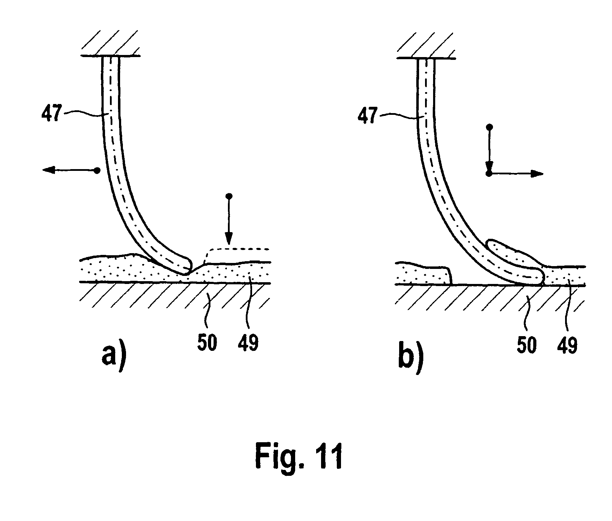

The inclined bristle 47 illustrated in FIG. 11b, which is driven in an oscillating swinging and poking motion, removes the plaque 49 from the tooth 50 more efficiently than the bristle 47 illustrated in FIG. 11a schematically which is only driven in an oscillating swinging motion and is inclined.

As FIG. 12 shows, the axis of oscillation or rotation 9 may also be tilted eccentrically and/or at an acute angle relative to the bristle field main axis 46. According to FIG. 12a, an eccentricity may be provided preferably in the direction of the longitudinal extension of the oval bristle support 7 when in its non-deflected neutral position, or in the direction of the toothbrush longitudinal direction, with the eccentricity preferably not exceeding 25%, being in particular between 5% and 15%, approximately, related to the largest diameter of the bristle support 7. On the one hand, this produces in the center of the bristle field a stronger relative motion between bristle field and tooth and hence an improved cleaning effect there, while on the other hand the self-centering effect is still maintained. According to FIG. 12b it is also possible to tilt the axis of rotation 9 relative to the bristle field main axis, preferably in the range from 5° to 15°, whereby a greater spatial component of the driving motion is accomplishable. Preferably, the spatial motion component has the same frequency as the oscillation/rotation component (all motions being coupled).

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it is intended to cover in the appended claims the scope of this invention.

## Claims

1. A brush head for an electric toothbrush, with a preferably plate-shaped bristle support (7) carrying a bristle field (10) having a bristle field main axis (46) extending perpendicularly to the bristle support (7), said bristle field (10) including a plurality of bristles defining with their free ends a flat or concave working surface (34) to be put onto the teeth to be cleaned, the brush head further comprising driving and/or transmitting means for driving the bristle support (7) using a reciprocating poking motion along a poking axis (48) and an oscillatory rotational motion about an axis of rotation (9), and comprising connecting means for connecting the bristle support (7) with a toothbrush handpiece (2), with a brush head longitudinal axis extending substantially parallel to a toothbrush handpiece longitudinal axis (26) in connected condition, **characterized in that** the bristle field with its bristle field main axis (46) is arranged at a tilt relative to the brush head longitudinal axis such that the bristle field main axis (46) is inclined at an acute angle of inclination (Φ) to a perpendicular upon the brush head longitudinal axis, and the working surface (34) is inclined in opposite direction to the tilt of the bristle field main axis (46) such that a plane lying onto the working surface (34) is sloped at an acute angle to a plane perpendicular to said bristle field main axis (46).

2. The brush head according to the preceding claim wherein the bristle field main axis (46) is inclined at an angle (Φ) in the range from 2.5° to 25°, preferably 3° to 17°, more preferably at an angle (Φ) of 8° +/- 3°, to the perpendicular upon the brush head longitudinal axis.

3. The brush head according to any of the preceding claims wherein the angle of inclination (θ) of the working surface (34) relative to the perpendicular upon the bristle field main axis (46) is smaller than the angle of inclination (Φ) of the bristle field main axis (46) relative to the perpendicular upon the brush head longitudinal axis, amounting in particular to 25% to 65%, approximately, preferably to 40%, approximately, of said angle of inclination (Φ), wherein preferably the angle of inclination (θ) of the working surface (34) relative to the perpendicular upon the bristle field main axis (46) is in the range from 1.5° to 4.5°, in particular 3.5 +/-1°, approximately.

4. The brush head according to any one of the preceding claims wherein the bristle support (7) is tilted away from a brush head side facing the toothbrush handpiece (2) in connected condition in accordance with the intended use in such a way that an obtuse angle (ξ) is provided between the bristle field main axis (46) and section of the brush head longitudinal axis facing the toothbrush handpiece in accordance with the intended use.

5. The brush head according to any one of the preceding claims wherein the bristle support (7) is of a round shape deviating from the circular, being in particular of an oval or elliptical configuration, with preferably the bristle tufts (11, 13, 31, 32), as seen looking at the top of the bristle support (7), being arranged symmetrically relative to the main axes of the bristle support (7) and/or rotationally symmetrically, in such a way that the points of attachment of the bristle tufts on the bristle support (7) are engageable one into the other by a turn through 180 degrees.

6. The brush head according to any one of the preceding claims wherein on an edge of the bristle field (10) outer, preferably elongated tufts (11) as seen looking at the top are provided which have a height greater than inner tufts (13) lying further inwardly in the bristle field, such as to form a central depression (16) in the working surface (34) defined by the free ends of the bristle tufts, wherein preferably a step-shaped jump in height is provided between the central depression (16) and said outer bristle tufts (11) of greater height, wherein preferably the central depression (16) has a groove-shaped bottom curved in one direction and substantially straight in the direction perpendicular thereto, and preferably the groove-shaped bottom (17) of the central depression (16) rises more intensively towards one circumferential side of the bristle support (7) than towards the opposing circumferential side, having in particular an approximately banana-shaped, asymmetrical curvature.

7. The brush head according to the preceding claim wherein the inner bristle tufts (13) are of different height, with the height of the inner bristle tufts (13) increasing as the distance of the bristle tufts to a center of the bristle support (7) increases, such as to form said groove-shaped bottom (17) of the central depression (16), and wherein the free ends of the inner bristle tufts (13) have inclined end surfaces, with different inner bristle tufts (13) having end surfaces with different inclinations, such as to form said groove-shaped bottom (17), preferably in such a way that the inclination of the end surfaces of the inner bristle tufts (13) increases as the distance of the inner bristle tufts (13) to the center of the bristle support (7) increases, wherein preferably the free ends of the inner bristle tufts (13) have an end surface which is not plane but curved in such a way as to form a continuous bottom curvature of the central depression (16).

8. The brush head according to any one of the preceding claims wherein the height of the bristle tufts on each ring (12, 14) of the bristle field (10), as seen looking in the circumferential direction of the respective ring, increases and decreases cyclically, increasing in particular from a first minimum value to a second maximum value, decreasing again to the first minimum value, then increasing again to the second maximum value and finally decreasing again to the first minimum value.

9. The brush head according to any one of the preceding claims 6 to 8 wherein the outer bristle tufts (11) have at their free ends bevels (18), said bevels (18) being preferably inclined at an angle γ relative to a flat section (19) of the free ends of the bristle tufts (11), said angle amounting to between 25° and 60°, and/or covering 25% to 75% of a width W of the respective bristle tuft (11), said width W being understood to be the dimension of the bristle tuft (11) vertically to its longitudinal axis and transversely to the longitudinal dimension of the respective bevel (18), said bevels (18) being preferably provided at an outer lying edge of the free ends of the bristle tufts (11) on the side close to the circumferential side of the bristle support (7), and wherein each of said bevels (18) defines a plane surface or extends along a curved path.

10. The brush head according to any one of the preceding claims 6 to 9 wherein said outer bristle tufts (11) are inclined towards the circumferential side of the bristle support (7) at an acute angle α in the range from 1.5° to 10°, preferably 3° to 5°, wherein preferably said outer bristle tufts are trapezoidally shaped as seen in a longitudinal sectional view of the bristle tuft (11), wherein the free end of the respective bristle tuft (11) is wider than the inner end thereof, wherein preferably an inner flank of said outer bristle tufts (11), which faces the inner bristle tufts (13), extends substantially vertically to the surface of the bristle support (7) and at least one outer flank of said outer bristle tufts (7) is inclined towards the circumferential side of the bristle support (7) at an acute angle to a vertical on the bristle support, wherein preferably outer, elongated bristle tufts (11) form with their free ends an end surface which defines an elongated contour with a longitudinal axis extending along a curved path, curving in particular arcuately, preferably circularly, around the axis of rotation (9) of the bristle support (7), wherein preferably the outer bristle tufts (11) have on their end surfaces curved bevels (18) whose longitudinal axis curves around said axis of rotation (9), curving in particular circularly around said axis of rotation (9).

11. The brush head according to the preceding claim wherein the axis of rotation (9) is eccentrically arranged relative to a center of the bristle support (7) and/or is tilted at an acute angle to a vertical on the bristle support (7).

12. The brush head according to any one of the preceding claims wherein a majority of bristle tufts (11, 13a, 13b, 13c) is arranged on the bristle support (7) in several nesting rings or similar contours, wherein an outer ring (12) mounts on opposing sides elongated bristle tufts (11) with an elongated tuft cross-section and a middle ring (14) within the outer ring (12) mounts several bristle tufts (13a, 13b) each of a cross-section smaller than the cross-section of the elongated bristle tufts (11) of the outer ring (12), wherein in a central area within said middle ring (14) there is provided at least one bristle tuft (13c) of a cross-section greater than or equal to the cross-section of the bristle tufts (13a, 13b) of the middle ring (14).

13. The brush head according to any one of the preceding claims wherein in at least one bristle tuft (13a, 13b, 13c) bristles with fanning ends are mixed with non-fanning bristles, in particular bristles devoid of longitudinal ribs, preferably of an approximately round or roundish configuration, wherein preferably a mixture ratio of 50% +/-10% fanning bristles to 50% +/-10% non-fanning bristles is provided, wherein preferably the bristle tufts with fanning bristles are provided in an inner and/or central area.

14. The brush head according to any one of the preceding claims, wherein the poking axis (48) of the reciprocating poking motion extends in parallel with the bristle field main axis (48) and is inclined at the acute angle of inclination (Φ) to the perpendicular upon the brush head longitudinal axis, wherein the said plane lying onto the working surface (34) is sloped at the said acute angle of inclination (θ) relative to the perpendicular upon the poking axis (48), wherein preferably the said plane lying onto the working surface (34) extend substantially in parallel with the said brush head longitudinal axis despite the tilt of the poking axis (48).

15. An electric toothbrush having a brush head according to any one of the preceding claims.

## Patentansprüche

1. Bürstenkopf für eine elektrische Zahnbürste, wobei ein vorzugsweise plattenförmiger Borstenträger (7) ein Borstenfeld (10) trägt, das eine Borstenfeld-Hauptachse (46) aufweist, die senkrecht zum Borstenträger (7) verläuft, wobei das Borstenfeld (10) eine Vielzahl von Borsten aufweist, die mit ihren freien Enden eine flache oder konkave Arbeitsoberfläche (34) definieren, die auf die zu reinigenden Zähne aufzubringen ist, wobei der Bürstenkopf ferner Antriebs- und/ oder Übertragungsmittel zum Antreiben des Borstenträgers (7) mit einer stoßenden Hin- und Herbewegung entlang einer Stoßachse (48) und einer oszillierenden Drehbewegung um eine Rotationsachse (9) umfasst und Verbindungsmittel zum Verbinden des Borstenträgers (7) mit einem Zahnbürstenhandstück (2) umfasst, wobei in verbundenem Zustand eine Bürstenkopf-Längsachse im Wesentlichen parallel zu einer Zahnbürstenhandstück-Längsachse (26) verläuft, **dadurch gekennzeichnet, dass** das Borstenfeld mit seiner Borstenfeld-Hauptachse (46) mit einer Neigung relativ zur Bürstenkopf-Längsachse angeordnet ist, so dass die Borstenfeld-Hauptachse (46) in einem spitzen Neigungswinkel (Φ) zu einer Senkrechten auf der Bürstenkopf-Längsachse geneigt ist und die Arbeitsoberfläche (34) in entgegengesetzter Richtung zur Neigung der Borstenfeld-Hauptachse (46) geneigt ist, so dass eine Ebene, die auf der Arbeitsoberfläche (34) liegt, in einem spitzen Winkel zu einer Ebene senkrecht zur Borstenfeld-Hauptachse (46) geneigt ist.

2. Bürstenkopf nach dem vorstehenden Anspruch, wobei die Borstenfeld-Hauptachse (46) in einem Winkel (Φ) im Bereich von 2,5° bis 25°, vorzugsweise 3° bis 17°, mehr bevorzugt in einem Winkel (Φ) von 8° +/- 3° zur Senkrechten auf der Bürstenkopf-Längsachse geneigt ist.

3. Bürstenkopf nach einem der vorstehenden Ansprüche, wobei der Neigungswinkel (θ) der Arbeitsoberfläche (34) relativ zur Senkrechten auf der Borstenfeld-Hauptachse (46) kleiner ist als der Neigungswinkel (Φ) der Borstenfeld-Hauptachse (46) relativ zur Senkrechten auf der Bürstenkopf-Längsachse, wobei er insbesondere ungefähr 25 % bis 65 %, vorzugsweise ungefähr bis 40 % des Neigungswinkels (Φ) beträgt, wobei vorzugsweise der Neigungswinkel (θ) der Arbeitsoberfläche (34) relativ zur Senkrechten auf der Borstenfeld-Hauptachse (46) im Bereich von 1,5° bis 4,5°, insbesondere 3,5 +/-1°, ungefähr, liegt.

4. Bürstenkopf nach einem der vorstehenden Ansprüche, wobei der Borstenträger (7) auf solche Weise von einer in verbundenem Zustand gemäß der beabsichtigten Verwendung zum Zahnbürstenhandstück (2) weisenden Bürstenkopfseite weg geneigt ist, dass ein stumpfer Winkel (ξ) zwischen der Borstenfeld-Hauptachse (46) und einem Abschnitt der Bürstenkopf-Längsachse, der gemäß der beabsichtigten Verwendung zum Zahnbürstenhandstück weist, bereitgestellt wird.

5. Bürstenkopf nach einem der vorstehenden Ansprüche, wobei der Borstenträger (7) eine runde Form aufweist, die von der kreisförmigen abweicht, und insbesondere von ovaler oder elliptischer Konfiguration ist, wobei vorzugsweise die Borstenbüschel (11, 13, 31, 32) bei Betrachtung von oberhalb des Borstenträgers (7) symmetrisch relativ zu den Hauptachsen des Borstenträgers (7) und/oder rotationssymmetrisch sind, so dass die Befestigungsstellen der Borstenbüschel am Borstenträger (7) durch eine 180-Grad-Drehung ineinander eingreifen können.

6. Bürstenkopf nach einem der vorstehenden Ansprüche, wobei an einem Rand des Borstenfelds (10) äußere, vorzugsweise längliche Büschel (11) bei Betrachtung von oberhalb bereitgestellt sind, die eine größere Höhe aufweisen als die inneren Büschel (13), die weiter innen im Borstenfeld liegen, um eine mittige Eintiefung (16) in der Arbeitsoberfläche (34) zu bilden, die durch die freien Enden der Borstenbüschel definiert wird, wobei vorzugsweise ein stufenförmiger Sprung in der Höhe zwischen der mittigen Eintiefung (16) und den äußeren Borstenbüscheln (11) größerer Höhe bereitgestellt wird, wobei vorzugsweise die mittige Eintiefung (16) einen rillenförmigen Boden aufweist, der in einer Richtung gekrümmt ist und in der Richtung senkrecht dazu im Wesentlichen gerade ist und vorzugsweise der rillenförmige Boden (17) der mittigen Eintiefung (16) zu einer Umfangsseite des Borstenträgers (7) intensiver ansteigt als zu der gegenüberliegenden Umfangsseite, wodurch insbesondere eine ungefähr bananenförmige, asymmetrische Krümmung entsteht.

7. Bürstenkopf nach dem vorstehenden Anspruch, wobei die inneren Borstenbüschel (13) von unterschiedlicher Höhe sind, wobei die Höhe der inneren Borstenbüschel (13) mit zunehmendem Abstand der Borstenbüschel zu einer Mitte des Borstenträgers (7) zunimmt, um den rillenförmigen Boden (17) der mittigen Eintiefung (16) zu bilden, und wobei die freien Enden der inneren Borstenbüschel (13) geneigte Endoberflächen aufweisen, wobei unterschiedliche innere Borstenbüschel (13) Endoberflächen mit unterschiedlichen Neigungen aufweisen, um den rillenförmigen Boden (17) zu bilden, vorzugsweise auf solche Weise, dass die Neigung der Endoberflächen der inneren Borstenbüschel (13) mit zunehmendem Abstand der inneren Borstenbüschel (13) zur Mitte des Borstenträgers (7) zunimmt, wobei vorzugsweise die freien Enden der inneren Borstenbüschel (13) eine Endoberfläche aufweisen, die nicht eben ist, sonder so gekrümmt, dass eine kontinuierliche Bodenkrümmung der mittigen Eintiefung (16) gebildet wird.

8. Bürstenkopf nach einem der vorstehenden Ansprüche, wobei die Höhe der Borstenbüschel an jedem Ring (12, 14) des Borstenfelds (10) bei Betrachtung in der Umfangsrichtung des jeweiligen Rings zyklisch zunimmt und abnimmt, zunehmend insbesondere von einem ersten Mindestwert zu einem zweiten Höchstwert, abnehmend wiederum zu einem ersten Mindestwert, dann wieder zunehmend zu dem zweiten Höchstwert und schließlich wieder abnehmend zu dem ersten Mindestwert.

9. Bürstenkopf nach einem der vorstehenden Ansprüche 6 bis 8, wobei die äußeren Borstenbüschel (11) an ihren freien Enden Abschrägungen (18) aufweisen, wobei die Abschrägungen (18) vorzugsweise in einem Winkel γ relativ zu einem flachen Abschnitt (19) der freien Enden der Borstenbüschel (11) geneigt sind, wobei der Winkel zwischen 25° und 60° liegt, und/oder 25 % bis 75 % einer Breite W des jeweiligen Borstenbüschels (11) abdecken, wobei die Breite W als die Abmessung des Borstenbüschels (11) vertikal zu seiner Längsachse und quer zur Längsabmessung der jeweiligen Abschrägung (18) zu verstehen ist, wobei die Abschrägungen (18) vorzugsweise an einem Außenrand der freien Enden der Borstenbüschel (11) auf der Seite nahe der Umfangsseite des Borstenträgers (7) bereitgestellt sind und wobei jede der Abschrägungen (18) eine ebene Oberfläche definiert oder entlang eines gekrümmten Weges verläuft.

10. Bürstenkopf nach einem der vorstehenden Ansprüche 6 bis 9, wobei die äußeren Borstenbüschel (11) zur Umfangsseite des Borstenträgers (7) in einem spitzen Winkel α im Bereich von 1,5° bis 10°, vorzugsweise 3° bis 5° geneigt sind, wobei vorzugsweise die äußeren Borstenbüschel bei Betrachtung im Längsschnitt des Borstenbüschels (11) trapezförmig sind, wobei das freie Ende des jeweiligen Borstenbüschels (11) breiter als das innere Ende davon ist, wobei vorzugsweise eine innere Flanke der äußeren Borstenbüschel (11), die zu den inneren Borstenbüscheln (13) weist, im Wesentlichen vertikal zur Oberfläche des Borstenträgers (7) verläuft und mindestens eine äußere Flanke der äußeren Borstenbüschel (7) zur Umfangsseite des Borstenträgers (7) in einem spitzen Winkel zu einer Vertikalen auf dem Borstenträger geneigt ist, wobei vorzugsweise äußere, längliche Borstenbüschel (11) mit ihren freien Enden eine Endoberfläche bilden, die eine längliche Kontur definiert, wobei eine Längsachse entlang eines gekrümmten Weges verläuft, der insbesondere bogenförmig, vorzugsweise kreisförmig, um die Rotationsachse (9) des Borstenträgers (7) gekrümmt ist, wobei vorzugsweise die äußeren Borstenbüschel (11) an ihren Endoberflächen gekrümmte Abschrägungen (18) aufweisen, deren Längsachse um die Rotationsachse (9) gekrümmt ist, wobei sie insbesondere kreisförmig um die Rotationsachse (9) gekrümmt ist.

11. Bürstenkopf nach dem vorstehenden Anspruch, wobei die Rotationsachse (9) exzentrisch relativ zu einer Mitte des Borstenträgers (7) angeordnet ist und/oder in einem spitzen Winkel zu einer Vertikalen auf dem Borstenträger (7) geneigt ist.

12. Bürstenkopf nach einem der vorstehenden Ansprüche, wobei eine Mehrzahl von Borstenbüscheln (11, 13a, 13b, 13c) auf dem Borstenträger (7) in mehreren verschachtelten Ringen oder ähnlichen Konturen angeordnet ist, wobei ein äußerer Ring (12) an gegenüberliegenden Seiten längliche Borstenbüschel (11) mit einem länglichen Büschelquerschnitt befestigt und ein mittlerer Ring (14) innerhalb des äußeren Rings (12) mehrere Borstenbüschel (13a, 13b) befestigt, die jeweils einen Querschnitt aufweisen, der kleiner ist als der Querschnitt der länglichen Borstenbüschel (11) des äußeren Rings (12), wobei in einem mittigen Bereich innerhalb des mittleren Rings (14) mindestens ein Borstenbüschel (13c) bereitgestellt ist, das einen Querschnitt aufweist, der größer als der oder gleich dem Querschnitt der Borstenbüschel (13a, 13b) des mittleren Rings (14) ist.

13. Bürstenkopf nach einem der vorstehenden Ansprüche, wobei bei mindestens einem Borstenbüschel (13a, 13b, 13c) Borsten mit aufgefächerten Enden mit nicht aufgefächerten Borsten, insbesondere Borsten ohne Längsrippen, vorzugsweise mit einer ungefähr runden oder rundlichen Konfiguration, gemischt sind, wobei vorzugsweise ein Mischungsverhältnis von 50 % +/-10 % aufgefächerten Borsten zu 50 % +/-10 % nicht aufgefächerten Borsten bereitgestellt ist, wobei vorzugsweise die Borstenbüschel mit aufgefächerten Borsten in einem inneren und/oder mittigen Bereich bereitgestellt sind.

14. Bürstenkopf nach einem der vorstehenden Ansprüche, wobei die Stoßachse (48) der stoßenden Hin- und Herbewegung parallel zur Borstenfeld-Hauptachse (48) verläuft und in dem spitzen Neigungswinkel (Φ) zur Senkrechten auf der Bürstenkopf-Längsachse geneigt ist, wobei die auf der Arbeitsoberfläche (34) liegende Ebene in dem spitzen Neigungswinkel (θ) relativ zu der Senkrechten auf der Stoßachse (48) geneigt ist, wobei vorzugsweise die auf der Arbeitsoberfläche (34) liegende Ebene trotz der Neigung der Stoßachse (48) im Wesentlichen parallel zu der Bürstenkopf-Längsachse verläuft.

15. Elektrische Zahnbürste mit einem Bürstenkopf nach einem der vorstehenden Ansprüche.

## Revendications

1. Tête de brosse pour une brosse à dents électrique, avec un support de poils de préférence en forme de plaque (7) portant une zone de poils (10) ayant un axe principal de zone de poils (46) s'étendant perpendiculairement au support de poils (7), ladite zone de poils (10) incluant une pluralité de poils définissant avec leurs extrémités libres une surface de travail plate ou concave (34) destinée à être placée sur les dents à nettoyer, la tête de brosse comprenant en outre un moyen d'entraînement et/ou de transmission destiné à entraîner le support de poils (7) en utilisant un mouvement de poussée alternatif le long d'un axe de poussée (48) et un mouvement de rotation oscillatoire autour d'un axe de rotation (9), et comprenant un moyen de connexion pour relier le support de poils (7) avec une pièce à main de brosse à dents (2), avec un axe longitudinal de tête de brosse s'étendant essentiellement parallèle à un axe longitudinal de pièce à main de brosse à dents (26) dans une condition attachée, **caractérisée en ce que** la zone de poils avec son axe principal de zone de poils (46) est arrangée selon une inclinaison par rapport à l'axe longitudinal de tête de brosse de telle sorte que l'axe principal de zone de poils (46) est incliné selon un angle aigu d'inclinaison (Φ) par rapport à une perpendiculaire sur l'axe longitudinal de tête de brosse, et la surface de travail (34) est inclinée dans une direction opposée à l'inclinaison de l'axe principal de zone de poils (46) de telle sorte qu'un plan se trouvant sur la surface de travail (34) est penché selon un angle aigu par rapport à un plan perpendiculaire audit axe principal de zone de poils (46).

2. Tête de brosse selon la revendication précédente, dans laquelle l'axe principal de zone de poils (46) est incliné selon un angle (Φ) dans la gamme de 2,5° à 25°, de préférence 3° à 17°, plus préférablement selon un angle (Φ) de 8° +/- 3°, par rapport à la perpendiculaire sur l'axe longitudinal de tête de brosse.

3. Tête de brosse selon l'une quelconque des revendications précédentes, dans laquelle l'angle d'inclinaison (θ) de la surface de travail (34) par rapport à la perpendiculaire sur l'axe principal de zone de poils (46) est plus petit que l'angle d'inclinaison (Φ) de l'axe principal de zone de poils (46) par rapport à la perpendiculaire sur l'axe longitudinal de tête de brosse, s'élevant en particulier à 25 % à 65 %, approximativement, de préférence à 40 %, approximativement, dudit angle d'inclinaison (Φ), dans laquelle, de préférence, l'angle d'inclinaison (θ) de la surface de travail (34) par rapport à la perpendiculaire sur l'axe principal de zone de poils (46) est dans la gamme de 1,5° à 4,5°, en particulier 3,5 +/-1°, approximativement.

4. Tête de brosse selon l'une quelconque des revendications précédentes, dans laquelle le support de poils (7) est incliné à l'écart d'un côté de tête de brosse faisant face à la pièce à main de brosse à dents (2) dans une condition attachée conformément à l'utilisation prévue d'une manière telle qu'un angle obtus (ξ) est fourni entre l'axe principal de zone de poils (46) et une section de l'axe longitudinal de tête de brosse faisant face à la pièce à main de brosse à dents conformément à l'utilisation prévue.

5. Tête de brosse selon l'une quelconque des revendications précédentes, dans laquelle le support de poils (7) est d'une forme ronde déviant de la forme circulaire, étant en particulier d'une configuration ovale ou elliptique, de préférence avec les touffes de poils (11, 13, 31, 32), telles qu'observées en regardant en haut du support de poils (7), étant arrangées symétriquement par rapport aux axes principaux du support de poils (7) et/ou symétriquement par rotation, d'une manière telle que les points d'attachement des touffes de poils sur le support de poils (7) peuvent venir en prise les uns dans les autres par un tour à 180 degrés.

6. Tête de brosse selon l'une quelconque des revendications précédentes, dans laquelle sur un bord de la zone de poils (10) des touffes externes de préférence allongées (11) telles qu'observées en regardant en haut sont fournies, lesquelles ont une hauteur plus grande que les touffes internes (13) se trouvant plus à l'intérieur dans la zone de poils, de façon à former une dépression centrale (16) dans la surface de travail (34) définie par les extrémités libres des touffes de poils, dans laquelle de préférence un saut étagé de hauteur est fourni entre la dépression centrale (16) et lesdites touffes de poils externes (11) de plus grande hauteur, dans laquelle de préférence la dépression centrale (16) a un fond en forme de rainure, incurvé dans une direction et essentiellement linéaire dans la direction perpendiculaire à celle-ci, et de préférence, le fond en forme de rainure (17) de la dépression centrale (16) monte plus intensivement vers un côté circonférentiel du support de poils (7) que vers le côté circonférentiel opposé, ayant en particulier une courbure asymétrique à peu près en forme de banane.

7. Tête de brosse selon la revendication précédente, dans laquelle les touffes de poils internes (13) sont de hauteur différente, la hauteur des touffes de poils internes (13) augmentant à mesure que la distance des touffes de poils par rapport au centre du support de poils (7) augmente, de façon à former ledit fond en forme de rainure (17) de la dépression centrale (16), et dans laquelle les extrémités libres des touffes de poils internes (13) ont des surfaces extrêmes inclinées, des touffes de poils internes différentes (13) ayant des surfaces extrêmes avec des inclinaisons différentes, de façon à former ledit fond en forme de rainure (17), de préférence d'une manière telle que l'inclinaison des surfaces extrêmes des touffes de poils internes (13) augmente à mesure que la distance des touffes de poils internes (13) par rapport au centre du support de poils (7) augmente, dans laquelle de préférence les extrémités libres des touffes de poils internes (13) ont une surface extrême qui n'est pas plane, mais incurvée d'une manière telle à former une courbure de fond continue de la dépression centrale (16).

8. Tête de brosse selon l'une quelconque des revendications précédentes, dans laquelle la hauteur des touffes de poils sur chaque anneau (12, 14) de la zone de poils (10), telle qu'observée en regardant dans la direction circonférentielle de l'anneau respectif, augmente et diminue de façon cyclique, augmentant en particulier d'une première valeur minimale à une deuxième valeur maximale, diminuant de nouveau à la première valeur minimale, puis augmentant de nouveau à la deuxième valeur maximale et diminuant enfin de nouveau à la première valeur minimale.

9. Tête de brosse selon l'une quelconque des revendications précédentes 6 à 8, dans laquelle les touffes de poils externes (11) ont à leurs extrémités libres des biseaux (18), lesdits biseaux (18) étant, de préférence, inclinés selon un angle γ par rapport à une section plate (19) des extrémités libres des touffes de poils (11), ledit angle s'élevant à une valeur comprise entre 25° et 60°, et/ou couvrant 25 % à 75 % d'une largeur W de la touffe de poils respective (11), ladite largeur W étant comprise comme étant la dimension de la touffe de poils (11) verticalement à son axe longitudinal et transversalement à la dimension longitudinale du biseau respectif (18), lesdits biseaux (18) étant, de préférence, fournis au niveau d'un bord se trouvant à l'extérieur des extrémités libres des touffes de poils (11) sur le côté proche du côté circonférentiel du support de poils (7), et dans laquelle chacun desdits biseaux (18) définit une surface plane ou s'étend le long d'une trajectoire courbée.

10. Tête de brosse selon l'une quelconque des revendications précédentes 6 à 9, dans laquelle lesdites touffes de poils externes (11) sont inclinées en direction du côté circonférentiel du support de poils (7) selon un angle aigu α dans la gamme de 1,5° à 10°, de préférence 3° à 5°, dans laquelle, de préférence, lesdites touffes de poils externes sont de forme trapézoïdale telle qu'observée dans une vue en coupe longitudinale de la touffe de poils (11), dans laquelle l'extrémité libre de la touffe de poils respective (11) est plus large que l'extrémité interne de celle-ci, dans laquelle, de préférence, un flanc interne desdites touffes de poils externes (11), qui fait face aux touffes de poils internes (13), s'étend essentiellement verticalement à la surface du support de poils (7) et au moins un flanc externe desdites touffes de poils externes (7) est incliné vers le côté circonférentiel du support de poils (7) selon un angle aigu par rapport à une verticale sur le support de poils, dans laquelle, de préférence, des touffes de poils externes allongées (11) forment avec leurs extrémités libres une surface extrême qui définit un contour allongé avec un axe longitudinal s'étendant le long d'une trajectoire courbée, s'incurvant en particulier de façon arquée, de préférence de façon circulaire, autour de l'axe de rotation (9) du support de poils (7), dans laquelle, de préférence, les touffes de poils externes (11) ont sur leurs surfaces extrêmes des biseaux courbés (18) dont l'axe longitudinal s'incurve autour dudit axe de rotation (9), s'incurvant en particulier de façon circulaire autour dudit axe de rotation (9).

11. Tête de brosse selon la revendication précédente, dans laquelle l'axe de rotation (9) est arrangé excentriquement par rapport à un centre du support de poils (7) et/ou est incliné selon un angle aigu par rapport à une verticale sur le support de poils (7).

12. Tête de brosse selon l'une quelconque des revendications précédentes, dans laquelle une majorité de touffes de poils (11, 13a, 13b, 13c) est arrangée sur le support de poils (7) en plusieurs anneaux d'emboîtement ou des contours similaires, dans laquelle un anneau externe (12) monte sur des côtés opposés des touffes de poils allongées (11) avec une coupe transversale de touffe allongée et un anneau du milieu (14) au sein de l'anneau externe (12) monte plusieurs touffes de poils (13a, 13b) chacune d'une coupe transversale plus petite que la coupe transversale des touffes de poils allongées (11) de l'anneau externe (12), dans laquelle dans une zone centrale au sein dudit anneau du milieu (14), on fournit au moins une touffe de poils (13c) d'une coupe transversale supérieure ou égale à la coupe transversale des touffes de poils (13a, 13b) de l'anneau du milieu (14).

13. Tête de brosse selon l'une quelconque des revendications précédentes, dans laquelle dans au moins une touffe de poils (13a, 13b, 13c), des poils avec des extrémités en éventail sont mélangés avec des poils qui ne sont pas en éventail, en particulier des poils dépourvus de nervures longitudinales, de préférence d'une configuration à peu près ronde ou arrondie, dans laquelle de préférence un rapport de mélange de 50 % +/-10 % de poils en éventail sur 50 % +/-10 % de poils qui ne sont pas en éventail est fourni, dans laquelle de préférence les touffes de poils avec des poils en éventail sont fournies dans une zone interne et/ou centrale.

14. Tête de brosse selon l'une quelconque des revendications précédentes, dans laquelle l'axe de poussée (48) du mouvement de poussée alternatif s'étend en parallèle avec l'axe principal de zone de poils (48) et est incliné selon l'angle aigu d'inclinaison (Φ) par rapport à la perpendiculaire sur l'axe longitudinal de tête de brosse, dans laquelle ledit plan se trouvant sur la surface de travail (34) est penché selon ledit angle aigu d'inclinaison (θ) par rapport à la perpendiculaire sur l'axe de poussée (48), dans laquelle, de préférence, ledit plan se trouvant sur la surface de travail (34) s'étend essentiellement en parallèle avec ledit axe longitudinal de tête de brosse malgré l'inclinaison de l'axe de poussée (48).

15. Brosse à dents électrique ayant une tête de brosse selon l'une quelconque des revendications précédentes.
